# EUROPÄISCHE PATENTSCHRIFT

(11) **EP 3 854 193 B1**
(45) Veröffentlichungstag und Bekanntmachung des Hinweises auf die Patenterteilung: **24.04.2024**
(21) Anmeldenummer: 20153828.7
(22) Anmeldetag: 27.01.2020
(51) Int. Cl.: A01C 15/02, A01C 23/00, A01C 23/04

(54) **AUSBRINGVORRICHTUNG UND VERFAHREN ZUM AUSBRINGEN EINES FLÜSSIGEN DÜNGEMITTELS**
DISPENSING DEVICE AND METHOD FOR DISPENSING A LIQUID FERTILIZER
DISPOSITIF DE DISTRIBUTION ET PROCÉDÉ DE DISTRIBUTION D'UN ENGRAIS LIQUIDE

(43) Veröffentlichungstag der Anmeldung: 28.07.2021
(73) Patentinhaber: Hauert HBG Dünger AG, 3257 Grossaffoltern (CH)
(72) Erfinder: Eberspächer, Ludwig, 90419 Nürnberg (DE)
(74) Vertreter: Wunderlich & Heim Patentanwälte PartG mbB

(56) Entgegenhaltungen:
- EP-A2- 2 076 329
- CN-A- 105 900 795
- US-A1- 2012 097 763
- US-A1- 2016 120 118
- US-A1- 2018 132 436

## Beschreibung

Die Erfindung betrifft eine Ausbringvorrichtung zum Ausbringen eines flüssigen Düngemittels mittels einer Pumpeinrichtung über eine Austragsdüse gemäß des Anspruchs 1.

Weiterhin betrifft die Erfindung ein Verfahren zum Ausbringen eines flüssigen Düngemittels mit einer solchen Ausbringvorrichtung gemäß des Anspruchs 12.

Ausbringvorrichtungen für flüssige Düngemittel sind hinlänglich bekannt. Diese weisen üblicherweise einen Behälter zur Aufnahme des flüssigen Düngemittels auf, aus welchem das Düngemittel mittels einer Pumpeinrichtung an die Umgebung, insbesondere einen Boden oder Pflanze, abgegeben werden kann.

Für eine umfassende Pflanzenversorgung werden sogenannte N-P-K-Dünger eingesetzt, welche also Stickstoff (N), Phosphat (P) und Kalium (K) aufweisen. Diese Volldünger dienen zur Nährstoffversorgung für eine Vielzahl unterschiedlicher Pflanzen. Allerdings ist es bekannt, dass unterschiedliche Pflanzen einen unterschiedlichen Nährstoffbedarf haben. So ist es beispielsweise für fruchttragende Pflanzen wünschenswert, Düngemittel mit einem erhöhten P-Anteil einzusetzen, während etwa für Rasen oder andere Grünpflanzen ein erhöhter Anteil der N-Komponente oder für Blütenpflanzen eine erhöhte K-Komponente für eine möglichst optimale Nährstoffversorgung zweckmäßig ist.

Soll eine möglichst individuelle, bedarfsgerechte Nährstoffversorgung von Pflanzen erfolgen, so ist es bei herkömmlichen Ausbringvorrichtungen notwendig, das Behältnis der Ausbringvorrichtung jeweils neu zu befüllen. Eventuelle Restmengen an noch im Behälter vorhandenen Düngemittel müssen dabei zwischengelagert oder entsorgt werden. Alternativ können auch mehrere Ausbringvorrichtungen vorgesehen werden, was mit einem erhöhten Kostenaufwand verbunden ist.

Folgende Vorrichtungen sind bekannt.

Die US 2018/132436 offenbart eine Anlage zur Mischung und Ausbringung. In einem größeren Mischtank wird eine Komponente zu einer vorgegebenen Menge Wasser zudosiert.

Die EP 2 076 329 offenbart ein auf einem Fahrzeug montiertes System, in dem mehrere Komponenten in ein Lösungsmittel, insbesondere Wasser, eindosiert und gelöst werden können. Dazu umfasst das System einen Festwasseranschluss, der aus dem mobilen System ein stationäres System macht. Ein Bediener trägt einen an das System angeschlossenen Ausbringschlauch und kann damit die gemischte Nährstofflösung oder auch Fahrzeugwaschlösung ausbringen. Um die einzelnen Komponenten in das Lösungsmittel zu mischen, ist eine Mischkammer vorgesehen, in die die Einzelkomponenten eingeleitet werden. Um die zudosierte Menge pro Zeiteinheit zu steuern wird, eine ungesteuerte Pumpe verwendet, die mittels nachgeschalteter Messblenden und gesteuerter Ventile einen bestimmten Durchfluss pro Zeiteinheit ermöglicht.

Die US 2016/120118 offenbart eine landwirtschaftlichen Spritzvorrichtung, die auf einen Traktor montierbar ist. Das System umfasst einen Frischwassertank, mehrere Komponententanks und einen Mischtank.

Der Erfindung liegt die **Aufgabe** zugrunde, eine Ausbringvorrichtung und ein Verfahren zum Ausbringen eines flüssigen Düngemittels anzugeben, mit welchen eine möglichst bedarfsgerechte Nährstoffversorgung von Pflanzen in effizienter Weise erreicht werden kann.

Die Aufgabe wird nach der Erfindung durch eine Ausbringvorrichtung mit den Merkmalen des Anspruchs 1 und durch ein Verfahren mit den Merkmalen des Anspruchs 12 gelöst. Bevorzugte Ausführungsformen der Erfindung sind in den jeweils abhängigen Ansprüchen angegeben.

Die erfindungsgemäße Ausbringvorrichtung sieht ein erstes Behältnis für eine erste Düngemittelkomponente und mindestens ein zweites Behältnis für eine zweite Düngemittelkomponente vor, so dass jedem Behältnis eine Dosierleitung und eine Dosierpumpe zugeordnet sind, über welche die jeweilige Düngemittelkomponente einer Mischeinrichtung zuführbar ist. Des Weiteren sieht die erfindungsgemäße Ausbringvorrichtung vor, dass die Mischeinrichtung ausgebildet ist, die Düngemittelkomponenten zu vermischen, wobei die Mischeinrichtung der Pumpeinrichtung vorgeschaltet ist.

Eine Grundidee der Erfindung kann darin gesehen werden, die Zusammensetzung des auszubringenden Düngemittels erst unmittelbar an der Ausbringvorrichtung einzustellen. Hierbei sind zwei oder mehr getrennte Behältnisse für unterschiedliche Düngemittelkomponenten vorgesehen. Jedem Behältnis mit einer Düngemittelkomponente ist eine Dosierleitung und eine Dosierpumpe zugeordnet. Diese werden individuell über eine Steuereinrichtung gesteuert, über welche eine beliebige Zusammensetzung und damit ein Mischverhältnis der Düngemittelkomponenten zum Bilden des Düngemittels eingestellt werden kann. Die Düngemittelkomponenten werden von den Dosierpumpen einer gemeinsamen Mischeinrichtung zugeführt, in welcher die Düngemittelkomponenten miteinander vermischt werden. Das fertig hergestellte flüssige Düngemittel kann dann über eine Pumpeinrichtung und eine Austragsdüse an die Umgebung ausgebracht werden.

Ein Bediener kann so abhängig von der Pflanzenart, der Bodenart, der Jahreszeit oder abhängig von anderen Bedingungen ein geeignetes Mischungsverhältnis einstellen, so dass eine individuelle und bedarfsgerechte Nährstoffversorgung von Pflanzen erreicht werden kann.

Eine besonders gute Einsetzbarkeit ergibt sich nach einer Weiterbildung der Erfindung dadurch, dass eine Steuereinrichtung vorgesehen ist, mit welcher zum Einstellen eines Mischungsverhältnisses der Düngemittelkomponenten die Dosierpumpen steuerbar sind. Die Dosierpumpen weisen vorzugsweise elektrische Antriebe auf, welche unmittelbar durch die Steuereinrichtung in ihrer Drehzahl und damit in ihrer Förderleistung individuell gesteuert und eingestellt werden können. Hierdurch können beliebige Mischungsverhältnisse eingestellt und erzielt werden.

Eine besonders gute Einsetzbarkeit ergibt sich gemäß einer Ausführungsvariante der Erfindung dadurch, dass die Steuereinrichtung ein Bedieneinheit mit einem Display umfasst. Das Display kann zusätzlich mit Bedienknöpfen oder einer Tastatur versehen sein oder unmittelbar als ein Touchscreen ausgebildet sein. Eine Einstellung kann somit durch Angabe von Zahlen oder durch entsprechend dargestellte Balken oder Reglerelemente zu den einzelnen Düngemittelkomponenten eingestellt werden, wobei Prozentangaben zu den Düngemittelkomponenten unmittelbar angezeigt werden können.

Grundsätzlich ist die Anzahl der vorzusehenden Behältnisse für verschiedene Düngemittelkomponenten nicht beschränkt. Besonders vorteilhaft ist es nach einer Weiterbildung der Erfindung, dass drei Behältnisse angeordnet sind, welche für die Düngemittelkomponenten N, P und K vorgesehen sind. Die Düngemittelkomponenten befinden sich dabei insbesondere in einer fließfähigen, vorzugsweise flüssigen Form. Die Behältnisse können auf drei beschränkt sein. Grundsätzlich können jedoch auch mehr als drei Behältnisse vorgesehen sein. Beispielsweise kann ein Behältnis mit einer Düngemittelgrundkomponente vorgesehen sein, welche eine Trägerflüssigkeit und vorzugsweise einen Mindestanteil an Stickstoff, Phosphat und Kalium aufweisen kann. Zusätzlich können als weitere Behältnisse in konzentrierter Form die Düngemittelkomponenten N, P und K vorgesehen sein, so dass dann zum Erzeugen des fertigen Düngemittels jeweils nur ein bestimmter Bestandteil an Stickstoff, Phosphat und Kalium der Grundkomponente zugeführt wird. Es können auch weitere Düngemittelkomponenten vorgesehen sein, so etwa eisenhaltige Düngemittelkomponenten, schwefelhaltige Düngemittelkomponenten, magnesiumhaltige Düngemittelkomponenten und/oder eine Düngemittelkomponente zur Einstellung eines jeweils gewünschten pH-Wertes. So können die Düngemittelkomponenten auf bestimmte Bodenverhältnisse oder für bestimmten Pflanzenarten eingestellt werden, welche etwa alkalische Böden oder saure Böden bevorzugen.

Eine weitere vorteilhafte Ausgestaltung der Erfindung kann darin gesehen werden, dass an den Dosierleitungen und/oder den Dosierpumpen Anschlusseinrichtungen angeordnet sind, über welche jeweils ein Behältnis lösbar und auswechselbar angeschlossen ist. Wird beispielsweise ein Düngemittel mit einem erhöhten Phosphatanteil erstellt und ausgebracht, so kann bei einer Entleerung des Behältnisses dieser gezielt ausgetauscht werden. Auf diese Weise kann eine vollständige Nutzung der jeweiligen Düngemittelkomponenten sichergestellt werden.

Grundsätzlich können die Behältnisse beliebig ausgebildet sein. Besonders vorteilhaft ist es nach einer Weiterbildung der Erfindung, dass die Behältnisse als eine Patrone oder ein Beutel ausgebildet sind. Die behälter- oder flaschenartige Patrone kann dabei eine feste Behälterwand aufweisen, während ein Beutel in kostengünstiger Weise aus einem flexiblen Folienmaterial hergestellt ist. Die Behältnisse können als Ersatz- oder Verbrauchskomponenten zugekauft und bereitgestellt werden.

Besonders vorteilhaft ist es weiterhin, dass die Behältnisse jeweils ein Anschlusselement zum Herstellen einer Flüssigkeitsverbindung mit der Anschlusseinrichtung aufweisen. Das Anschlusselement kann etwa ein Gewindeanschluss oder in einem einfachen Fall eine Folie sein, welche gezielt von einer nadelförmigen Anschlusseinrichtung an der Ausbringvorrichtung durchstochen werden kann. Eine Halterung der Behältnisse kann in geeigneter Weise durch eine Halteeinrichtung erfolgen, beispielsweise mit einem Spannelement oder einer Schraubverbindung.

Zusätzlich ist es nach einer Ausführungsvariante der Erfindung vorteilhaft, dass eine Dosiereinrichtung zum Zudosieren mindestens einer weiteren Komponente vorgesehen ist. Die Dosiereinrichtung kann dabei zum Zuführen eines flüssigen Zusatzmittels und/oder insbesondere einer pulverförmigen Komponente ausgebildet sein. Insbesondere können Spurenelemente, insbesondere verschiedene Metall- und Mineralsalze, zur Erstellung des Düngemittels zugeführt werden.

Dabei ist es besonders vorteilhaft, dass die Dosiereinrichtung zum Zudosieren mindestens einer weiteren Komponente, insbesondere von Spurenelementen, zwischen der Mischeinrichtung und der Ausgabedüse angeordnet ist.

Erfindungsgemäß ist die Ausbringvorrichtung von einem Gärtner oder Landwirt tragbar und mit einer Batterie zur elektrischen Energieversorgung ausgebildet. Die Batterie kann dabei ein wiederaufladbarer Akkumulator sein. Die Ausbringvorrichtung kann dabei von einem berufsmäßigen Gärtner oder Landwirt oder auch von einem Hobbygärtner im Garten, im Gewächshaus oder für Balkon- oder Zimmerpflanzen im oder am Haus eingesetzt werden.

Eine besonders zweckmäßige und kostengünstige Ausgestaltung der Ausbringvorrichtung ergibt sich nach einer Weiterbildung der Erfindung dadurch, dass die Dosierpumpen als Schlauchpumpen ausgebildet sind. Dabei ist eine flexible Dosierleitung vorgesehen, welche gerade oder vorzugsweise schlaufenartig im Bereich der Schlauchpumpe ausgebildet ist. Mittels eines rotierend angetriebenen Rotors wird ein Schlauchabschnitt regelmäßig in einer Richtung überstrichen, wobei eine Pumpwirkung in der Dosierleitung erzielt wird. Grundsätzlich können jedoch auch andere Pumpenarten zum Einsatz kommen.

Eine weitere zweckmäßige Ausgestaltung der Erfindung besteht darin, dass die Pumpeinrichtung eine Kolbenpumpe aufweist, welche von Hand oder von einem Stellantrieb betätigbar ist. Der Stellantrieb kann dabei ein Linearantrieb sein, etwa ein hydraulisch oder pneumatisch betätigter Stellzylinder oder ein Spindelantrieb oder ein Zahnstangenantrieb. Hinsichtlich eines energiebetriebenen Stellantriebes kann auch ein Druckreservoir vorgesehen sein, durch welches das fertig gemischte Düngemittel aus der Austragsdüse ausgetrieben wird.

Die Mischeinrichtung kann einen Behälter umfassen, in welchen die Dosierleitungen derart münden, dass sich die einströmenden Düngemittelkomponenten vermischen. Vorzugsweise weist der Mischbehälter eine Öffnung auf, durch welche zusätzlich Umgebungsluft einsaugbar ist. Hierdurch wird einem Ausbilden eines Unterdrucks im Mischbehälter vorgebaut.

Bezüglich des Verfahrens ist die Erfindung dadurch gekennzeichnet, dass mindestens eine erste Düngemittelkomponente aus einem ersten Behältnis und mindestens eine zweite Düngemittelkomponente aus einem zweiten Behältnis mittels einer jeweils an einem Behältnis zugeordneten Dosierpumpe einer Mischeinrichtung zugeführt werden, dass die Düngemittelkomponenten in einer Mischeinrichtung vermischt werden und dass das erzeugte Düngemittel über eine Pumpeinrichtung zu einer Austragsdüse weitergeleitet und an die Umgebung ausgebracht wird.

Das Verfahren kann insbesondere durch die zuvor beschriebene Ausbringvorrichtung ausgeführt werden. Dabei können die zuvor beschriebenen Vorteile erzielt werden.

Besonders vorteilhaft ist es nach einer Weiterbildung des erfindungsgemäßen Verfahrens, dass über eine Steuereinrichtung ein beliebiges Mischungsverhältnis der Düngemittelkomponenten eingestellt wird. Über die Steuereinrichtung können die einzelnen Dosierpumpen und gegebenenfalls auch eine Dosiereinrichtung zum Zudosieren insbesondere von Spurenelementen individuell eingestellt werden, so dass für jeden Anwendungsfall in effizienter Weise ein bedarfsgerechtes Düngemittel erstellt wird.

Eine weitere Vereinfachung in der Anwendung ergibt sich nach einer Verfahrensvariante der Erfindung dadurch, dass in der Steuereinrichtung vorgegebene Mischungsverhältnisse für die Düngemittelkomponenten hinterlegt sind, welche über die Steuereinrichtung ausgewählt werden. Es können so definierte vorgegebene Mischungsverhältnisse der einzelnen Düngemittelkomponenten etwa für Frucht-, Blüh- oder Grünpflanzen mit einem jeweiligen bestimmten N-, P- und K-Gehalt abgespeichert sein. Alternativ oder ergänzend können die einzelnen Mengen und Mischungsverhältnisse auch von Hand eingestellt werden, so dass durch einen Nutzer ein eigenes spezielles Düngemittel erzeugt werden kann.

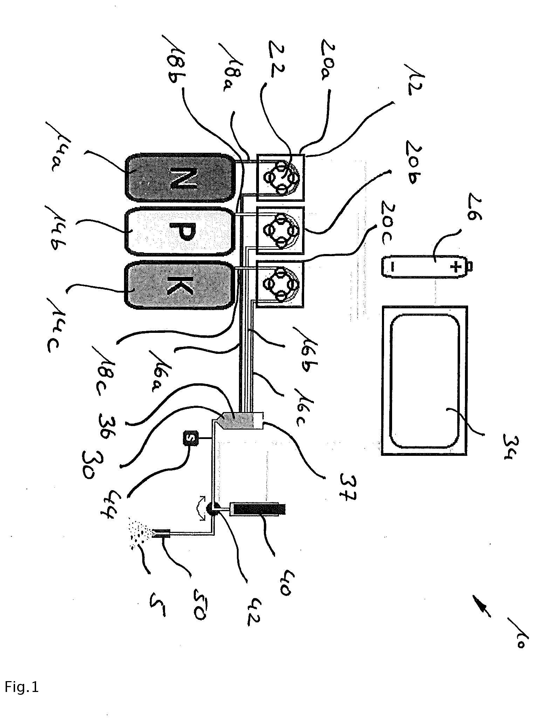

Die Erfindung wird nachfolgend anhand eines bevorzugten Ausführungsbeispiels weiter beschrieben, welches schematisch in der einzigen Figur dargestellt ist. Die Figur zeigt eine erfindungsgemäße Ausbringvorrichtung 10 mit einem nur schematisch angedeuteten Grundträger 12. An diesem sind ein erstes Behältnis 14a für eine erste Düngemittelkomponente N, ein zweites Behältnis 14b für eine zweite Düngemittelkomponente P und ein drittes Behältnis 14c für eine dritte Düngemittelkomponente K angeordnet.

Für jedes der Behältnisse 14 ist eine eigene Dosierpumpe 20 vorgesehen. Dabei ist das erste Behältnis 14a über eine nur schematisch angedeutete erste Anschlusseinrichtung 18a mit der ersten Dosierpumpe 20a verbunden, während das zweite Behältnis 14b und das dritte Behältnis 14c über eine zweite Anschlusseinrichtung 18b beziehungsweise eine dritte Anschlusseinrichtung 18c mit einer zweiten Dosierpumpe 20b beziehungsweise einer dritten Dosierpumpe 20c lösbar verbunden sind. Innerhalb der Dosierpumpen 20 erstreckt sich schlaufenartig ein Abschnitt einer jeweiligen Dosierleitung 16a, 16b, 16c, wobei in jeder Dosierpumpe 20 ein rotierend angetriebener Rotor zum Erzeugen einer Pumpwirkung in dem flexiblen Schlauchabschnitt vorgesehen ist.

Die drei Dosierleitungen 16 verlaufen bis zu einer schematisch angedeuteten Mischeinrichtung 30, in welcher die drei Düngemittelkomponenten N, P und K miteinander vermischt werden. Die Mischeinrichtung 30 weist einen Mischbehälter 36 mit einer oberen Öffnung 37 zum Einsaugen von Luft auf.

Über eine gemeinsame Ausgabeleitung 32 werden die miteinander vermischten flüssigen Düngemittelkomponenten zu einem Ventil 42 einer Pumpeinrichtung 40 weitergleitet, welche als eine Kolbenpumpe ausgebildet ist. An der Ausgabeleitung 32 zwischen der Mischeinrichtung 30 und der Pumpeinrichtung 40 kann eine Dosiereinrichtung 44 angeschlossen sein, mit welcher beispielsweise kleinere Mengen von Spurenelementen in flüssiger oder pulverförmiger Form zum Bilden des Düngemittels 5 zugeführt werden. Das Düngemittel 5 wird über die Pumpeinrichtung 40 mittels einer Austragsdüse 50 an die Umgebung abgegeben, insbesondere versprüht.

Das Ventil 42 ist als ein 3-Wege-Ventil mit Rückschlagfunktion ausgebildet, so dass die Pumpeinrichtung 40 beim Ansaugen nur Düngemittel 5 aus der Mischeinrichtung 30 ansaugt und beim Ausgeben angesaugtes Düngemittel 5 nur in Richtung der Ausgabedüse 50 fördert.

Zur Einstellung des Mischungsverhältnisses in der Mischeinrichtung 30 können die einzelnen Dosierpumpen 20 über eine zentrale Steuereinrichtung 34 individuell angesteuert werden. Über die Steuereinrichtung 34 kann insbesondere eine Drehzahl des jeweiligen Rotors 22 in den Dosierpumpen 20 beeinflusst und eingestellt werden. Hierdurch wird unmittelbar die Pumpleistung der jeweiligen Dosierpumpe 20 bestimmt. Die Steuereinrichtung 34 kann auch die Pumpeinrichtung 40, das Ventil 42 und die Dosiereinrichtung 44 steuern. Die Steuereinrichtung 34, die einzelnen Dosierpumpen 20 sowie die weiteren Komponenten werden von einer zentralen Batterie 26 mit elektrischer Energie versorgt, wobei Daten- und Energieleitungen vorgesehen werden.

## Patentansprüche

1. Ausbringvorrichtung zum Ausbringen eines flüssigen Düngemittels (5) mittels einer Pumpeinrichtung (40) über eine Ausgabedüse (50), wobei
ein erstes Behältnis (14a) für eine erste Düngemittelkomponente und mindestens ein zweites Behältnis (14b, 14c) für eine zweite Düngemittelkomponente vorgesehen sind,
wobei jedem Behältnis (14) eine Dosierleitung (16) und eine Dosierpumpe (20) zugeordnet sind, über welche die jeweilige Düngemittelkomponente einer Mischeinrichtung (30) zuführbar ist, und
wobei die Mischeinrichtung (30) ausgebildet ist, die Düngemittelkomponenten zu vermischen, wobei die Mischeinrichtung (30) der Pumpeinrichtung (40) vorgeschaltet ist,
und wobei die Ausbringvorrichtung (10) von einem Gärtner oder Landwirt tragbar und mit einer Batterie (26) zur elektrischen Energieversorgung ausgebildet ist.

2. Ausbringvorrichtung nach Anspruch 1,
**dadurch gekennzeichnet,**
**dass** eine Steuereinrichtung (34) vorgesehen ist, mit welcher zum Einstellen eines Mischungsverhältnisses der Düngemittelkomponenten die Dosierpumpen (20) steuerbar sind.

3. Ausbringvorrichtung nach Anspruch 2,
**dadurch gekennzeichnet,**
**dass** die Steuereinrichtung (34) eine Bedieneinheit mit einem Display umfasst.

4. Ausbringvorrichtung nach einem der Ansprüche 1 bis 3,
**dadurch gekennzeichnet,**
**dass** ein drittes Behältnis (14) vorgesehen ist, so dass drei Behältnisse (14) angeordnet sind, welche die Düngemittelkomponenten N, P und K aufnehmen.

5. Ausbringvorrichtung nach einem der Ansprüche 1 bis 4,
**dadurch gekennzeichnet,**
**dass** an den Dosierleitungen (16) und/oder den Dosierpumpen (20) Anschlusseinrichtungen (18) angeordnet sind, über welche jeweils ein Behältnis (14) lösbar und auswechselbar angeschlossen ist.

6. Ausbringvorrichtung nach einem der Ansprüche 1 bis 5,
**dadurch gekennzeichnet,**
**dass** die Behältnisse (14) jeweils als eine Patrone oder als ein Beutel ausgebildet sind.

7. Ausbringvorrichtung nach Anspruch 5 oder 6,
**dadurch gekennzeichnet,**
**dass** die Behältnisse (14) jeweils ein Anschlusselement zum Herstellen einer Flüssigkeitsverbindung mit der Anschlusseinrichtung (18) aufweisen.

8. Ausbringvorrichtung nach einem der Ansprüche 1 bis 7,
**dadurch gekennzeichnet,**
**dass** eine Dosiereinrichtung (44) zum Zudosieren mindestens einer weiteren Komponente vorgesehen ist.

9. Ausbringvorrichtung nach Anspruch 8,
**dadurch gekennzeichnet,**
**dass** die Dosiereinrichtung (44) zum Zudosieren der zumindestens einen weiteren Komponente, insbesondere von Spurenelementen, zwischen der Mischeinrichtung (40) und der Ausgabedüse (50) angeordnet ist.

10. Ausbringvorrichtung nach einem der Ansprüche 1 bis 9,
**dadurch gekennzeichnet,**
**dass** die Dosierpumpen (20) als Schlauchpumpen ausgebildet sind.

11. Ausbringvorrichtung nach einem der Ansprüche 1 bis 10,
**dadurch gekennzeichnet,**
**dass** die Pumpeinrichtung (40) eine Kolbenpumpe aufweist, welche von Hand oder von einem Stellantrieb betätigbar ist.

12. Verfahren zum Ausbringen eines flüssigen Düngemittels (5), mit einer Ausbringvorrichtung (10) nach einem der Ansprüche 1 bis 11,
**dadurch gekennzeichnet,**
**dass** mindestens eine erste Düngemittelkomponente aus dem ersten Behältnis (14a) und mindestens eine zweite Düngemittelkomponente aus dem zweiten Behältnis (14b, 14c) mittels der jeweils an einem Behältnis zugeordneten Dosierpumpe der Mischeinrichtung (30) zugeführt werden, dass die Düngemittelkomponenten in der Mischeinrichtung (30) vermischt werden und dass das erzeugte Düngemittel (5) über die Pumpeinrichtung (40) zu der Austragsdüse (50) weitergeleitet und an die Umgebung ausgebracht wird.

13. Verfahren nach Anspruch 12,
**dadurch gekennzeichnet,**
**dass** über eine Steuereinrichtung (34) ein beliebiges Mischungsverhältnis der Düngemittelkomponenten eingestellt wird.

14. Verfahren nach Anspruch 13,
**dadurch gekennzeichnet,**
**dass** in der Steuereinrichtung (34) vorgegebene Mischungsverhältnisse für die Düngemittelkomponenten hinterlegt sind, welche über die Steuereinrichtung (34) ausgewählt werden.

## Claims

1. Dispensing device for dispensing a liquid fertiliser (5) by means of a pump device (40) via a dispensing nozzle (50),
wherein a first container (14a) for a first fertiliser component and at least one second container (14b, 14c) for a second fertiliser component are provided, wherein a dosing line (16) and a dosing pump (20), via which the respective fertiliser component can be fed to a mixing device (30), are assigned to each container (14), and
wherein the mixing device (30) is configured to mix the fertiliser components, wherein the mixing device (30) is connected upstream of the pump device (40), and
wherein the dispensing device (10) can be worn by a gardener or farmer and is configured with a battery (26) for electrical power supply.

2. Dispensing device according to claim 1,
**characterised in that**
a control device (34) is provided with which the dosing pumps (20) can be controlled in order to set a mixing ratio of the fertiliser components.

3. Dispensing device according to claim 2,
**characterised in that**
the control device (34) comprises a control unit with a display.

4. Dispensing device according to any one of claims 1 to 3,
**characterised in that**
a third container (14) is provided, such that three containers (14) are arranged, which receive the fertiliser components N, P and K.

5. Dispensing device according to any one of claims 1 to 4,
**characterised in that**
connection devices (18) are arranged on the dosing lines (16) and/or the dosing pumps (20), via each of which a container (14) is detachably and replaceably connected.

6. Dispensing device according to any one of claims 1 to 5,
**characterised in that**
the containers (14) are each configured as a cartridge or a bag.

7. Dispensing device according to claim 5 or 6,
**characterised in that**
the containers (14) each have a connection element for producing a fluid connection with the connection device (18).

8. Dispensing device according to any one of claims 1 to 7,
**characterised in that**
a dosing device (44) is provided for dosing at least one further component.

9. Dispensing device according to claim 8,
**characterised in that**
the dosing device (44) for dosing the at least one further component, in particular trace elements, is arranged between the mixing device (40) and the dispensing nozzle (50).

10. Dispensing device according to any one of claims 1 to 9,
**characterised in that**
the dosing pumps (20) are configured as hose pumps.

11. Dispensing device according to any one of claims 1 to 10,
**characterised in that**
the pump device (40) has a piston pump, which can be operated manually or by an actuator.

12. Method for dispensing a liquid fertiliser (5), having a dispensing device (10) according to any one of claims 1 to 11,
**characterised in that**
at least one first fertiliser component from the first container (14) and at least one second fertiliser component from the second container (14b, 14c) are fed to the mixing device (30) by means of the dosing pump assigned to a respective container,
the fertiliser components are mixed in the mixing device (30) and
the fertiliser (5) produced is transferred to the dispensing nozzle (50) via the pump device (40) and discharged into the environment.

13. Method according to claim 12,
**characterised in that**
any desired mixing ratio of the fertiliser components is set via a control device (34).

14. Method according to claim 13,
**characterised in that**
predetermined mixing ratios for the fertiliser components are stored in the control device (34), which are selected via the control device (34).

## Revendications

1. Dispositif d'application pour répandre un engrais liquide (5) au moyen d'un dispositif de pompage (40) par l'intermédiaire d'une buse de distribution (50), dans lequel
un premier récipient (14a) pour un premier composant d'engrais et au moins un deuxième récipient (14b, 14c) pour un deuxième composant d'engrais sont prévus,
une conduite de dosage (16) et une pompe de dosage (20) étant assignées à chaque récipient (14), par lesquelles le composant d'engrais respectif peut être amené à un dispositif de mélange (30), et
le dispositif de mélange (30) étant conçu pour mélanger les composants de l'engrais, le dispositif de mélange (30) étant monté en amont du dispositif de pompage (40),
et dans lequel le dispositif d'application (10) peut être porté par un jardinier ou un agriculteur et est conçu avec une batterie (26) pour l'alimentation en énergie électrique.

2. Dispositif d'application selon la revendication 1,
**caractérisé en ce qu'**il est prévu un dispositif de commande (34) avec lequel les pompes de dosage (20) peuvent être commandées pour régler un rapport de mélange des composants de l'engrais.

3. Dispositif d'application selon la revendication 2,
**caractérisé en ce que** le dispositif de commande (34) comprend une unité de commande avec un écran.

4. Dispositif d'application selon l'une des revendications 1 à 3,
**caractérisé en ce qu'**un troisième récipient (14) est prévu, de sorte que trois récipients (14) sont disposés, qui reçoivent les composants d'engrais N, P et K.

5. Dispositif d'application selon l'une des revendications 1 à 4,
**caractérisé en ce que** des dispositifs de raccordement (18) sont disposés sur les conduites de dosage (16) et/ou les pompes de dosage (20), par lesquels chaque récipient (14) est raccordé de manière amovible et interchangeable.

6. Dispositif d'application selon l'une des revendications 1 à 5,
**caractérisé en ce que** les récipients (14) se présentent chacun sous la forme d'une cartouche ou d'un sachet.

7. Dispositif d'application selon la revendication 5 ou 6,
**caractérisé en ce que** les récipients (14) comportent chacun un élément de raccordement pour établir une communication de fluide avec le dispositif de raccordement (18).

8. Dispositif d'application selon l'une des revendications 1 à 7,
**caractérisé en ce qu'**il est prévu un dispositif de dosage (44) pour ajouter au moins un autre composant.

9. Dispositif d'application selon la revendication 8,
**caractérisé en ce que** le dispositif de dosage (44) pour le dosage d'au moins un autre composant, en particulier d'oligo-éléments, est disposé entre le dispositif de mélange (40) et la buse de distribution (50).

10. Dispositif d'application selon l'une des revendications 1 à 9,
**caractérisé en ce que** les pompes de dosage (20) sont des pompes péristaltiques.

11. Dispositif d'application selon l'une des revendications 1 à 10,
**caractérisé en ce que** le dispositif de pompage (40) comporte une pompe à piston qui peut être actionnée manuellement ou par un moteur.

12. Procédé d'épandage d'un engrais liquide (5), comprenant un dispositif d'application (10) selon l'une des revendications 1 à 11,
**caractérisé**
**en ce qu'**au moins un premier composant d'engrais provenant du premier récipient (14a) et au moins un deuxième composant d'engrais provenant du deuxième récipient (14b, 14c) sont envoyés à un dispositif de mélange (30) au moyen de la pompe doseuse assignée au récipient respectif,
**en ce que** les composants de l'engrais sont mélangés dans le dispositif de mélange (30) et
**en ce que** l'engrais produit (5) est transmis à la buse de distribution (50) par l'intermédiaire du dispositif de pompage (40) et est répandu dans l'environnement.

13. Procédé selon la revendication 12,
**caractérisé en ce qu'**un dispositif de commande (34) permet de régler un rapport de mélange quelconque des composants de l'engrais.

14. Procédé selon la revendication 13,
**caractérisé en ce que** des rapports de mélange prédéfinis pour les composants de l'engrais sont enregistrés dans le dispositif de commande (34), lesquels sont sélectionnés par le biais du dispositif de commande (34).
